# EUROPÄISCHE PATENTSCHRIFT

(11) **EP 2 611 609 B1**
(45) Veröffentlichungstag und Bekanntmachung des Hinweises auf die Patenterteilung: **24.12.2014**
(21) Anmeldenummer: 11764089.6
(22) Anmeldetag: 31.08.2011
(51) Int. Cl.: B32B 27/32, B32B 27/34, B32B 3/30, B32B 27/08, C08J 7/04, C09J 7/02, B05D 3/02

(54) **VERFAHREN ZUR HERSTELLUNG EINER KUNSTSTOFFFOLIE MIT EINER AUSGEHÄRTETEN POLYSILOXAN-BESCHICHTUNG**
PROCESS FOR PRODUCING A POLYMERIC FILM WITH A CURED POLYSILOXANE COATING
PROCÉDÉ DE FABRICATION D'UN FEUILLE PLASTIQUE COMPORTANT UN REVÊTEMENT DE POLYSILOXANE DURCI

(30) Priorität: 31.08.2010 DE 102010036022
(43) Veröffentlichungstag der Anmeldung: 10.07.2013
(73) Patentinhaber: Huhtamaki Films Germany GmbH & Co. KG, 91301 Forchheim (DE)
(72) Erfinder: FÜRST, Michael, 91332 Heiligenstadt (DE); PFEFFERMANN, Herbert, 91301 Forchheim (DE)
(74) Vertreter: Kutzenberger, Helga
(86) Internationale Anmeldenummer: PCT/EP2011/004377
(87) Internationale Veröffentlichungsnummer: WO 2012/028306

(56) Entgegenhaltungen:
- EP-A1- 1 277 802
- EP-A1- 1 557 451
- EP-A1- 1 734 093
- WO-A1-2007/141327
- JP-A- 2001 225 416
- JP-A- 2009 233 953

## Beschreibung

Die vorliegende Erfindung betrifft ein Verfahren zur Herstellung einer einseitig mit einer ausgehärteten Polysiloxan-Beschichtung ausgerüsteten Kunststofffolie, indem eine schlauchförmige, flachgelegte Kunststofffolie beidseitig mit einer ausgehärteten Polysiloxan-Beschichtung, umfassend die nachstehend aufgeführten Verfahrensschritte (a) bis (d), beidseitig mit einer ausgehärteten Polysiloxan-Beschichtung ausgerüstet wird und dann - zumindest einseitig entlang eines Seitenrandes vollständig geöffnet wird und beschreibt eine durch dieses Verfahren erhältliche, mit einer ausgehärteten Polysiloxan-Beschichtung ausgerüstete Kunststofffolie und eine Verwendung einer solchen Kunststofffolie als Trenn- bzw. Schutzfolie.

Ablösbare Trennfolien werden vielfach als entfernbare Schutzfolien für Klebebänder, Selbstklebeetiketten oder klebefähige Sanitär- und Hygieneartikel eingesetzt, um ein Verkleben dieser einseitig oder beidseitig klebenden Produkte bei der Lagerung oder Verarbeitung zu verhindern. Sie müssen sich durch eine gute Trennwirkung gegen Klebstoffe wie z.B. druckempfindliche Klebstoffe oder andere klebefähige Materialien auszeichnen.

Aus dem Stand der Technik wie z.B. aus EP 1 277 802 A1 oder EP 0 769 540 A2 sind bereits silikonisierte Trennfolien bekannt.

Silikonisierte Trennfolien werden üblicherweise durch Ausrüsten von ein- oder mehrschichtigen Folien mit einer Polysiloxan-Beschichtung hergestellt. Dabei werden diese Folien zunächst mit einem noch nicht ausgehärteten Polysiloxan beschichtet, welches im Anschluss an die erfolgte Beschichtung vorzugsweise thermisch ausgehärtet wird.

Nachteilig an einem solchen Verfahren ist jedoch, dass die zu beschichtenden Kunststofffolien bestimmte mechanische und/oder thermomechanische Mindestanforderungen erfüllen müssen, damit sie den thermischen Belastungen beim Aushärtungsvorgang der Polysiloxan-Beschichtung standhalten. Dementsprechend müssen die Kunststofffolien abhängig von dem Polymermaterial, aus dem sie hergestellt worden sind, eine bestimmte Mindestschichtdicke aufweisen, damit es beim Beschichtungs- und insbesondere beim Aushärtungsvorgang nicht zu einer thermischen oder thermomechanischen Überbelastung der zu beschichtenden bzw. beschichteten Folie mit der Folge von unerwünschten Qualitäts- oder Verfahrensbeeinträchtigungen wie beispielsweise Faltenbildung, Bahnschrumpf, Bahnabrissen oder Fehlstellen in der Polysiloxan-Beschichtung kommt.

Eine nur vergleichsweise geringe Schichtdicke einer silikonisierten Trennfolie ist aber nicht nur aus Kostengründen für viele Anwendungen wünschenswert.

Es besteht daher ein Bedarf, Verfahren zur Ausrüstung von ein- oder mehrschichtigen Kunststofffolien mit einer auszuhärtenden Polysiloxan-Beschichtung zur Verfügung zu stellen, bei denen die vorstehend genannten Nachteile nicht auftreten.

Aufgabe der vorliegenden Erfindung war es daher, ein Verfahren zur Herstellung einer einseitig mit einer thermisch ausgehärteten Polysiloxan-Beschichtung ausgerüsteten ein- oder mehrschichtigen Kunststofffolie zur Verfügung zu stellen, ohne dass die auszurüstende Folie bestimmte mechanische Mindestanforderungen, insbesondere eine bestimmte Mindestschichtdicke für die Ausrüstung mit der Polysiloxan-Beschichtung erfüllen muss bzw. ohne dass eine Verminderung auf eine gewünschte Schichtdicke der ein- oder mehrschichtigen Kunststofffolie erst nach deren Ausrüstung mit der Polysiloxan-Beschichtung erfolgen kann.

Diese Aufgabe wird durch ein vorzugsweise kontinuierliches Verfahren zur Herstellung einer einseitig mit einer thermisch ausgehärteten Polysiloxan-Beschichtung ausgerüsteten ein- oder mehrschichtigen Kunststoffolie gelöst, indem eine schlauchförmige, flachgelegte ein- oder mehrschichtige Kunststofffolie zunächst
(a) auf einer ihrer Oberflächen ggf. unter Entlüftung mit wenigstens einem noch nicht ausgehärteten Polysiloxan einseitig beschichtet wird,
(b) diese Polysiloxan-Beschichtung unter Trocknen durch Einwirkung von Wärme ausgehärtet wird,
(c) die noch freie nichtbelegte zweite Oberfläche der flachgelegten, schlauchförmigen Kunststofffolie ggf. unter Entlüftung mit wenigstens einem noch nicht ausgehärteten Polysiloxan beschichtet wird,
(d) diese Polysiloxan-Beschichtung unter Trocknen durch Einwirkung von Wärme ausgehärtet wird und
(e) die beidseitig jeweils mit einer ausgehärteten Polysiloxan-Beschichtung ausgerüstete, flachgelegte, schlauchförmige Kunststofffolie in Laufrichtung zumindest entlang eines Seitenrandes, vorzugsweise entlang beider Seitenränder, vollständig geöffnet wird und
   die einseitig mit einer ausgehärteten Polysiloxan-Beschichtung ausgerüstete, breitgelegte Folie oder die jeweils einseitig mit einer Polysiloxan-Beschichtung ausgerüsteten erhaltenen zwei Folien aufgerollt gelagert wird bzw. werden.
Vorzugsweise kann das erfindungsgemäße Verfahren kontinuierlich durchgeführt werden.

Durch das erfindungsgemäße Verfahren wird die Bereitstellung einer einseitig mit einer ausgehärteten Polysiloxan-Beschichtung ausgerüsteten ein- oder mehrschichtigen Folie aus Kunststoff ermöglicht, die bereits bei der Silikonisierung eine um bis zu 50% geringere Schichtdicke aufweisen kann als eine Folie, die mittels herkömmlicher Beschichtungsverfahren silikonisiert wird. Dies wird durch den Einsatz einer flachgelegten, ggf. bereits geöffneten, schlauchförmigen Folie bei der Beschichtung in den Verfahrensschritten (a) und (c) und bei dem jeweiligen thermischen Aushärtungsvorgang in den Verfahrenschritten (b) und (d) ermöglicht, da die Folie bei diesen Arbeitsgängen praktisch die doppelte Schichtdicke und damit die notwendige mechanische und/oder thermomechanische Belastbarkeit aufweist. Eine entsprechend halb so dicke Folie, deren Dicke nur der Dicke einer erfindungsgemäß eingesetzten, aber nicht flachgelegten, schlauchförmigen Folie entspricht, weist dagegen die erforderliche mechanische und/oder thermomechanische Belastbarkeit dazu nicht auf. Das erfindungsgemäße Verfahren zeichnet sich daher dadurch aus, dass nicht erst eine Schichtdickenverminderung z.B. durch Recken an der bereits silikonisierten Kunststofffolie vorgenommen werden muss.

Aus einer mittels des erfindungsgemäßen Verfahrens beidseitig mit einer ausgehärteten Polysiloxan-Beschichtung ausgerüsteten, vorzugsweise schlauchförmigen Kunststofffolie wird vorzugsweise durch vollständiges Öffnen der flachgelegten, schlauchförmigen Kunststofffolie zumindest entlang eines Seitenrandes in Längsrichtung und Auseinanderbreiten eine einseitig silikonisierte Folie erhalten, die eine um bis zu 50% geringere Schichtdicke aufweisen kann als eine Folie, die mittels herkömmlicher Beschichtungsverfahren ohne Probleme silikonisiert werden kann. Erfindungsgemäß kann dieses vollständige Öffnen einer flachgelegten, vorzugsweise schlauchförmigen Kunststofffolie bereits vor der ersten Polysiloxan-Beschichtung, d.h. vor dem Verfahrensschritt a) erfolgen.

In den Verfahrensschritten (a) und (c) des erfindungsgemäßen Verfahrens erfolgt eine Beschichtung jeweils einer Oberfläche der flachgelegten, vorzugsweise schlauchförmigen Folie mit wenigstens einem noch nicht ausgehärteten Polysiloxan. Vorzugsweise kann dabei jeweils eine Entlüftung der flachgelegten Folie erfolgen, um Unebenheiten der flachgelegten Folie bei der Beschichtung, beispielsweise durch die in der flachgelegten Folie vorhandene Luftpolster, und damit das Auftreten von Fehlstellen in der Polysiloxan-Beschichtung zu vermeiden. Dabei wird jeweils eine Oberfläche der ein- oder mehrschichtigen, flachgelegten, vorzugsweise noch schlauchförmigen Folie mit wenigstens einem vorzugsweise flüssigen, besonders bevorzugt zähflüssigen, noch nicht ausgehärteten Polysiloxan oder einer vorzugsweise flüssigen Mischung wenigstens eines noch nicht ausgehärteten Polysiloxans sowie ggf. wenigstens eines der nachstehend genannten Zusatzstoffe ausgerüstet. Die Ausrüstung erfolgt dabei durch eine vollflächige Beschichtung jeweils einer Oberfläche der ein- oder mehrschichtigen, flachgelegten, vorzugsweise noch schlauchförmigen Folie mit wenigstens einem Polysiloxan oder einer Mischung.

In den Verfahrensschritten (b) und (d) des erfindungsgemäßen Verfahrens erfolgt jeweils eine Aushärtung der in den Verfahrensschritten (a) und (c) jeweils auf eine Oberfläche der flachgelegten, vorzugsweise noch schlauchförmigen Folie aufgebrachten Polysiloxan-Beschichtung unter Trocknen, vorzugsweise durch Einwirkung von Wärme und ggf. unter UV-Bestrahlung. Die so beidseitig mit einer ausgehärteten Polysiloxan-Beschichtung ausgerüstete, vorzugsweise noch schlauchförmige Folie kann ggf. im Anschluss auf die gewünschten Maße zugeschnitten und ein- oder beidseitig aufgetrennt und vorzugsweise aufgerollt gelagert werden.

Vorzugsweise wird die bereits einseitig mit einer ausgehärteten Polysiloxan-Beschichtung ausgerüstete, flachgelegte, vorzugsweise noch schlauchförmige Folie vor dem Verfahrensschritt (c) vorzugsweise mit Hilfe eines Wendekreuzes um 180° gewendet und dann der Verfahrensschritt (c) durchgeführt. Es ist aber auch möglich, die einseitig mit einer ausgehärteten Polysiloxan-Beschichtung ausgerüstete, flachgelegte, vorzugsweise noch schlauchförmige Folie vor dem Verfahrensschritt (c) im aufgerollten Zustand zwischen zu lagern.

In einer bevorzugten Ausführungsform des erfindungsgemäßen Verfahrens wird die beidseitig jeweils mit einer ausgehärteten Polysiloxan-Beschichtung ausgerüstete, flachgelegte vorzugsweise noch schlauchförmige Folie nach dem Verfahrensschritt (d) in einem weiteren Verfahrensschritt (e) in Laufrichtung zumindest entlang eines Seitenrandes, vorzugsweise entlang beider Seitenränder, vollständig geöffnet, vorzugsweise aufgetrennt, und die so erhaltene breitgelegte Folie oder die so erhaltenen zwei Folien im Anschluss vorzugsweise aufgerollt gelagert.

Die im erfindungsgemäßen Verfahren eingesetzte, schlauchförmige Kunststofffolie ist vorzugsweise eine vor der Ausrüstung mit einer ausgehärteten Polysiloxan-Beschichtung ein- oder mehrschichtige, vorzugsweise einschichtige schlauchförmige Folie.

In einer bevorzugten Ausführungsform des erfindungsgemäßen Verfahrens basiert die oder wenigstens eine Schicht der vorzugsweise schlauchförmigen Kunststofffolie vor der Ausrüstung mit der ausgehärteten Polysiloxan-Beschichtung auf wenigstens einem ggf. biologisch abbaubaren, thermoplastischen Polymeren, vorzugsweise auf wenigstens einem Olefin-Homo- oder Copolymeren, wenigstens einem thermoplastischen Homo- oder Copolyamid und/oder wenigstens einem thermoplastischen, biologisch abbaubaren Polymeren.

Zur Herstellung dieser Schicht eignet sich vorzugsweise wenigstens ein thermoplastisches Olefin- Homo- oder Copolymer von α,ß-ungesättigten Olefinen mit 2-10 Kohlenstoffatomen. Geeignete Olefin-Homopolymere sind vorzugsweise ausgewählt aus der Gruppe umfassend Ethylen-Homopolymere (Polyethylene, PE), vorzugsweise LDPE und HDPE, Propylen-Homopolymere (Polypropylene, PP), Butylen-Homopolymere (Polybutylene, PB) und Isobutylen-Homopolymere (Polyisobutylene, PI) oder Mischungen aus wenigstens zwei der genannten Polymere. Mit "LDPE" wird Polyethylen niedriger Dichte bezeichnet, welches eine Dichte im Bereich von 0,86-0,93 g/cm³ aufweist und sich durch einen hohen Verzweigungsgrad der Moleküle auszeichnet. Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm³ liegen kann. Geeignete Olefin-Copolymere sind vorzugsweise Copolymere von Ethylen und/oder Propylen und wenigstens einem α-Olefin mit mindestens 4, vorzugsweise mit 4-10, besonders bevorzugt mit 4-8 Kohlenstoffatomen, ganz besonders bevorzugt Copolymere von Ethylen und/oder Propylen mit wenigstens einem α-Olefin ausgewählt aus der Gruppe umfassend Buten, Hexen und Octen. Der α-Olefin-Anteil im Olefin-Copolymeren beträgt vorzugsweise höchstens 25 Gew.-%, besonders bevorzugt höchstens 15 Gew.-%, jeweils bezogen auf das Gesamtgewicht des Olefin-Copolymeren. Besonders geeignete Copolymere von Ethylen und wenigstens einem α-Olefin mit mindestens 4 Kohlenstoffatomen sind LLDPE und/oder mPE. Mit "LLDPE" werden lineare Ethylen-Copolymere niedriger Dichte bezeichnet, welche durch das Vorhandensein einer linearen Hauptkette mit daran befindlichen Seitenketten gekennzeichnet sind und eine Dichte im Bereich von 0,86 und 0,94 g/cm³ aufweisen. Mit "mPE" werden Ethylen-Copolymere bezeichnet, die mittels Metallocen-Katalysatoren polymerisiert wurden und vorzugsweise eine Dichte im Bereich von 0,88 und 0,93 g/cm³ aufweisen. Bevorzugte Olefin-Homo-oder Copolymere zur Herstellung der Schicht (1) sind Ethylen-Homo- oder Copolymere und/oder Propylen-Homo- oder Copolymere. Besonders bevorzugt zur Herstellung der Schicht (1) ist ein Ethylen-Homopolymer wie LDPE oder HDPE.

In einer bevorzugten Ausführungsform des erfindungsgemäßen Verfahrens besteht die vorzugsweise schlauchförmige Folie vor der Ausrüstung mit der ausgehärteten Polysiloxan-Beschichtung nur aus einer Schicht, die auf wenigstens einem Olefin-Homo- oder Copolymeren, vorzugsweise auf einem Olefin-Homopolymeren, besonders bevorzugt auf HDPE, LDPE oder Polypropylen basiert.

Zur Herstellung der oder einer Schicht der vorzugsweise schlauchförmigen Kunststofffolie eignet sich auch wenigstens ein thermoplastisches Homo- und/oder Copolyamid. Vorzugsweise können zur Herstellung der Schicht thermoplastische Homo- oder Copolyamide ausgewählt aus der Gruppe umfassend thermoplastische aliphatische, teilaromatische oder aromatische Homo-oder Copolyamide eingesetzt werden. Diese Homo-oder Copolymamide können aus Diaminen wie aliphatischen Diaminen mit 2-10 Kohlenstoffatomen, insbesondere Hexamethylendiamin und/oder aromatischen Diaminen mit 6-10 Kohlenstoffatomen, insbesondere p-Phenylendiamin und aus Dicarbonsäuren aliphatische oder aromatische Dicarbonsäuren mit 6-14 Kohlenstoffatomen wie z.B. Adipinsäure, Terephthalsäure oder Isoterephthalsäure hergestellt werden. Weiterhin können Homo- oder Copolyamide aus Lactamen mit 4-10 Kohlenstoffatomen wie z.B. aus ε-Caprolactam hergestellt werden. Erfindungsgemäß zum Einsatz kommende Polyamide sind vorzugsweise PA 6, PA 12, PA 66, PA 6I, PA 6T oder entsprechende Co-Polymere oder Mischungen aus wenigstens zwei der genannten Polyamide.

In einer weiteren bevorzugten Ausführungsform des erfindungsgemäßen Verfahrens kann als vorzugsweise schlauchförmige Folie vor der Ausrüstung mit der ausgehärteten Polysiloxan-Beschichtung auch eine mehrschichtige Kunststofffolie eingesetzt werden. Diese kann eine innenliegende Schicht basierend auf wenigstens einem Homo- oder Copolyamid aufweisen, die auf beiden Oberflächen jeweils eine Schicht basierend auf wenigstens einem Olefin-Homo- oder Copolymeren, vorzugsweise auf wenigstens einem Olefin-Homopolymeren, besonders bevorzugt auf wenigstens einem Propylen-Homopolymeren und ggf. notwendigen Haftvermittlerschichten aufweist.

Zur Herstellung der oder einer Schicht der erfindungsgemäß zum Einsatz kommenden Kunststofffolie kann auch wenigstens ein thermoplastisches biologisch abbaubares Polymer verwendet werden.

Unter dem Begriff "biologisch abbaubares Polymer" wird im Sinne der vorliegenden Erfindung ein natürliches, halbsynthetisches oder synthetisches Polymer in unterschiedlicher Form wie z.B. als eine oder einzige Schicht einer schlauchförmigen Folie verstanden, die unter Einwirkung von Mikroorganismen und/oder Enzymen zu Wasser, Kohlendioxid und Biomasse gemäß DIN EN 13432 zersetzbar ist und beim Desintegrationstest im Rahmen der aeroben Kompostierung nach 12 Wochen zu mindestens 90%, vorzugsweise zu mindestens 95%, besonders bevorzugt zu ≥ 99% biologisch abgebaut wird.

Vorzugsweise kann zur Herstellung der vorzugsweise schlauchförmigen Kunststofffolie wenigstens ein thermoplastisches biologisch abbaubares Polymer ausgewählt aus der Gruppe umfassend Milchsäure-Homo- und Copolymere, vorzugsweise Polylactide, besonders bevorzugt DL-Lactid, L-Lactid und D-Lactid, Polyhydroxyalkanoate, Cellulose, Cellulose-Derivate, thermoplastische Stärke, Polyester, vorzugsweise Polyester aus Lactonen mit 4-10 Kohlenstoffatomen, besonders bevorzugt Polycaprolactone, zumindest teilverseifte Polyvinylacetate, Ethylen-Vinylalkohol-Copolymere, Copolymere aus wenigstens zwei Monomeren der genannten Polymere und Mischungen aus wenigstens zwei der genannten Polymere, eingesetzt werden. Entsprechende zumindest teilverseifte Polyvinylacetate können durch vollständige oder unvollständige Hydrolyse von entsprechenden Polyvinylacetaten (PVAc) gewonnen werden und umfassen sowohl teilverseifte Polyvinylacetate mit einem Verseifungsgrad von 50 bis 98 mol-% als auch vollverseifte Polyvinylacetate, d.h. Polyvinylalkohole (PVOH) mit einem Verseifungsgrad ≥ 98 %. Entsprechende Ethylen-Vinylalkohol-Copolymere (EVOH) können durch Hydrolyse von entsprechenden Ethylen-Vinylacetat-Copolymeren (EVAc) gewonnen werden und umfassen vorzugsweise Ethylen-Vinylalkohol-Copolymere (EVOH) mit einem Verseifungsgrad ≥ 98 % und einem Ethylen-Anteil von 0,01-20 mol-%, vorzugsweise von 0,1-10 mol-%.

In einer weiteren bevorzugten Ausführungsform des erfindungsgemäßen Verfahrens wird als vorzugsweise schlauchförmige Folie vor der Ausrüstung mit der auszuhärtenden Polysiloxan-Beschichtung eine einschichtige Kunststofffolie eingesetzt, die auf wenigstens einem biologisch abbaubaren Polymeren, vorzugsweise auf wenigstens einem Polylactid, basiert.

Gemäß dem erfindungsgemäßen Verfahren wird die flachgelegte, ein- oder mehrschichtige, vorzugsweise noch schlauchförmige oder ggf. bereits geöffnete Kunststofffolie beidseitig mit einer ausgehärteten Polysiloxan-Beschichtung ausgerüstet.

Unter dem Begriff "Polysiloxan" werden im Sinne der vorliegenden Erfindung Verbindungen verstanden, deren Polymerketten abwechselnd aus Silicium- und Sauerstoffatomen aufgebaut sind. Ein Polysiloxan basiert auf n wiederkehrenden Siloxan-Einheiten (-[Si(R₂)-O]-)ₙ, welche jeweils unabhängig voneinander mit zwei organischen Resten R disubstituiert sind, wobei R vorzugsweise jeweils für R¹ oder OR¹ steht und R¹ jeweils für einen Alkyl-Rest oder einen Aryl-Rest steht. Vorzugsweise basiert die ausgehärtete Polysiloxan-Beschichtung auf einer wiederkehrenden Dialkylsiloxan-Einheit oder auf einer wiederkehrenden Alkylaryl-Siloxan-Einheit. Je nachdem, wie viele Si-O-Bindungen eine einzelne Siloxan-Einheit, jeweils bezogen auf ein vierwertiges Siliciumatom, aufweist, lassen sich diese Einheiten in endständige monofunktionelle Siloxane (M) mit einer Si-O-Bindung, difunktionelle Siloxane (D) mit zwei Si-O-Bindungen, trifunktionelle Siloxane (T) mit drei Si-O-Bindungen und tetrafunktionelle Siloxane (Q) mit vier Si-O-Bindungen unterscheiden. Vorzugsweise weist die erfindungsgemäße Polysiloxan-Beschichtung eine vernetzte ring- oder kettenförmige, besonders bevorzugt eine vernetzte kettenförmige Struktur auf, welche durch (D)-, (T)-, und/oder (Q)-Einheiten zu einem zwei-oder dreidimensionalen Netzwerk verknüpft ist. Die Anzahl n der wiederkehrenden Siloxan-Einheiten [Si(R₂)-O]-)ₙ in der Polysiloxankette wird als Polymerisationsgrad des Polysiloxans bezeichnet.

Die ausgehärtete Polysiloxan-Beschichtung gemäß dem erfindungsgemäßen Verfahren basiert vorzugsweise auf wenigstens einem ausgehärteten, d.h. vernetzten Polysiloxan ausgewählt aus der Gruppe umfassend additionsvernetzte, vorzugsweise metallkatalysiert additionsvernetzte, kondensationsvernetzte, radikalisch vernetzte und/oder kationisch vernetzte Polysiloxane.

Besonders bevorzugt basiert die Polysiloxan-Beschichtung auf wenigstens einem ausgehärteten Polysiloxan, das durch thermische Aushärtung, ggf. unter Einwirkung von UV-Strahlung, ausgehärtet wurde. Bevorzugt basiert die Polysiloxan-Beschichtung auf wenigstens einem ausgehärteten Polysiloxan ausgewählt aus der Gruppe umfassend Polydialkylsiloxane, vorzugsweise Polydimethylsiloxane, und Polyalkylarylsiloxane, vorzugsweise Polymethylphenylsiloxane, die jeweils ausgehärtet sind.Thermisch ausgehärtete Polysiloxane können durch thermische Hydrosilylierung von Silan-Funktionen aufweisenden Polysiloxanen mit einer zumindest eine Kohlenstoff-Doppelbindung aufweisenden Verbindung erhalten werden.

Je nach Bedarf können ggf. die Polysiloxan-Beschichtung sowie zumindest eine Schicht der erfindungsgemäß zum Einsatz kommenden, vorzugsweise schlauchförmigen Folie, jeweils unabhängig voneinander, mit Zusatzstoffen ausgewählt aus der Gruppe umfassend Antiblockmittel, Antistatika, Antifogmittel, antimikrobielle Wirkstoffe, Farbstoffe, Farbpigmente, Stabilisierungsmittel, vorzugsweise Hitze-Stabilisatoren, Prozess-Stabilisatoren, Prozesshilfsmittel, Flammschutzmittel, Nukleierungsmittel, Kristallisationsmittel, vorzugsweise Kristallkeimbildner, Gleitmittel, optische Aufheller, Flexibilisierungsmittel, Siegelmittel, Weichmacher, Abstandshalter, Füllstoffe, Peel-Additive, Wachse, Benetzungsmittel, oberflächenaktive Verbindungen, vorzugsweise Tenside, und Dispergiermittel, dotiert sein. Dabei darf die Trennwirkung der Polysiloxan-Beschichtung nicht beeinträchtigt werden.

Ggf. können die Polysiloxan-Beschichtung sowie ggf. zumindest eine Schicht der Kunststofffolie, wenn notwendig, jeweils unabhängig voneinander wenigstens 0,01-30 Gew.-%, vorzugsweise wenigstens 0,1-20 Gew.-%, jeweils bezogen auf das Gesamtgewicht der Schicht, wenigstens einen der vorstehend genannten Zusatzstoffe enthalten.

Die Herstellung der in dem erfindungsgemäßen Verfahren eingesetzten, ein- oder mehrschichtigen, schlauchförmigen Kunststofffolie vor der Ausrüstung mit der auszuhärtenden Polysiloxan-Beschichtung kann nach bekannten Herstellungsverfahren besonders bevorzugt durch Blasfolien-Extrusion oder Blasfolien-Co-Extrusion erfolgen, wobei die Schichtdicke der schlauchförmigen Kunststofffolie durch das vorzugsweise einmalige Aufblasverhältnis des extrudierten Folienschlauches bereits eingestellt wird.

In einer bevorzugten Ausführungsform wird die in dem erfindungsgemäßen Verfahren eingesetzte vorzugsweise schlauchförmige Folie vor der Ausrüstung mit der auszuhärtenden Polysiloxan-Beschichtung als ein- oder mehrschichtige schlauchförmige Kunststofffolie produziert und eingesetzt. Die so erhaltene schlauchförmige Folie kann vorzugsweise direkt ohne vorherige Lagerung nach der Herstellung geprägt werden. Ggf. kann die Folie vor oder nach der Prägung zumindest einseitig geöffnet werden.

Durch die Prägung kann die in einem erfindungsgemäßen Verfahren eingesetzte vorzugsweise schlauchförmige Kunststofffolie einseitig oder insgesamt durchgängig mit einer Prägestruktur, vorzugsweise mit Hilfe eines Struktur- oder Prägekalanders umfassend ein Rasterauftragswerk, vorzugsweise ein Rasterwalzwerk, in-line oder off-line versehen werden. Ein solcher Kalander verfügt über vorzugsweise in Höhenrichtung übereinander in einem bestimmten Abstand angeordnete, gegensinnig drehende Walzen. Zur Prägung wird die flachgelegte vorzugsweise noch schlauchförmige Kunststofffolie den Walzen zugeführt und durch den Walzenspalt hindurchgeführt, wobei die Spaltweite variabel einstellbar ist. Das Rasterwalzwerk weist vorzugsweise eine erste Walze mit einer vergleichsweise harten Oberfläche, besonders bevorzugt eine Stahlwalze, und eine zweite Walze mit einer vergleichsweise weniger harten Oberfläche, vorzugsweise aus einem elastischen Material, besonders bevorzugt aus Gummi oder Hartgummi, auf.

Vorzugsweise kann die in einem erfindungsgemäßen Verfahren zum Einsatz kommende flachgelegte, vorzugsweise schlauchförmige oder ggf. bereits zumindest einseitig geöffnete Folie vor der Ausrüstung oder zwischen den beiden Ausrüstungen mit der auszuhärtenden Polysiloxan-Beschichtung aufgerollt und ggf. in aufgerolltem Zustand gelagert werden. Durch das erste Aufrollen wird die vorzugsweise schlauchförmige Folie gleichzeitig flachgelegt. Die aufgerollte schlauchförmige Folie wird zu der ersten oder weiteren Ausrüstung mit der auszuhärtenden Polysiloxan-Beschichtung, d.h. für den Verfahrensschritt (a) bzw. (c) des erfindungsgemäßen Verfahrens wieder abgerollt.

Vorzugsweise weist bzw. weisen die nach dem Verfahrensschritt (e), d. h. dem ggf. noch notwendigen längsseitigen Öffnen der schlauchförmigen Kunststofffolie erhaltene(n) einseitig mit einer ausgehärteten Polysiloxan-Beschichtung ausgerüstete, breitgelegte Folie oder die beiden jeweils einseitig mit einer ausgehärteten Polysiloxan-Beschichtung ausgerüsteten Folien eine Gesamtschichtdicke von ≤ 45 µm, vorzugsweise von ≤ 35 µm, besonders bevorzugt von ≤ 25 µm auf.

Wird in dem erfindungsgemäßen Verfahren eine einschichtige, schlauchförmige Folie basierend auf LDPE eingesetzt, so kann das Endprodukt, d.h. die einseitig mit einer ausgehärteten Polysiloxan-Beschichtung ausgerüstete Folie vorzugsweise eine Schichtdicke von ≤ 45 µm aufweisen.

Wird in dem erfindungsgemäßen Verfahren eine einschichtige, schlauchförmige Folie basierend auf HDPE eingesetzt, so kann das Endprodukt, d.h. die einseitig mit einer ausgehärteten Polysiloxan-Beschichtung ausgerüstete Folie vorzugsweise eine Schichtdicke von ≤ 35 µm aufweisen.

Wird in dem erfindungsgemäßen Verfahren eine schlauchförmige Folie eingesetzt, die dreischichtig ist und deren innenliegende Schicht auf wenigstens einem Homo- oder Copolyamid basiert, und auf ihren beiden Oberflächen jeweils eine Schicht basierend auf wenigstens einem Olefin-Homo- oder Copolymeren, vorzugsweise auf wenigstens einem Olefin-Copolymeren, besonders bevorzugt auf wenigstens einem Propylen-Copolymeren, aufweist, so kann das Endprodukt, d.h. die einseitig mit einer ausgehärteten Polysiloxan-Beschichtung ausgerüstete Folie vorzugsweise eine Schichtdicke von ≤ 25 µm aufweisen.

Die Schichtdicke der Polysiloxan-Beschichtung einer nach dem erfindungsgemäßen Verfahren erhaltenen Folie ist vorzugsweise ≤ 5 µm, besonders bevorzugt ≤ 3 µm, ganz besonders bevorzugt im Bereich von 0,1 µm bis ≤ 3 µm, insbesondere im Bereich von 0,2 µm bis ≤ 1,5 µm.

Ein weiterer Gegenstand der vorliegenden Beschreibung ist eine einseitig mit einer ausgehärteten Polysiloxan-Beschichtung ausgerüstete Folie, die nach einem erfindungsgemäßen Verfahren erhältlich ist.

Die einseitige, mit einer ausgehärteten Polysiloxan-Beschichtung ausgerüstete und nach einem erfindungsgemäßen Verfahren erhältliche Folie eignet sich hervorragend als ablösbare Trenn- bzw. Schutzfolie.

Die nach einem erfindungsgemäßen Verfahren erhaltene ablösbare Trenn- bzw. Schutzfolie kann geprägt sein.

Die nach einem erfindungsgemäßen Verfahren erhaltene ablösbare Trenn- bzw. Schutzfolie kann bedruckt und/oder farbig und/oder transparent sein.

Ein weiterer Gegenstand der vorliegenden Beschreibung ist daher auch eine Verwendung einer nach dem erfindungsgemäßen Verfahren erhältlichen Folie als ablösbare Trenn- bzw. Schutzfolie, vorzugsweise als ablösbare Trenn- bzw. Schutzfolie, vorzugsweise für Selbstklebeetiketten, für Klebebänder, für Aufkleber oder für klebefähige Hygieneartikeln, vorzugsweise von Damenbinden und Slip-Einlagen.

Das erfindungsgemäße Verfahren kann vorzugsweise in einer nachfolgend beschriebenen Vorrichtungsanordnung durchgeführt werden:
Diese Vorrichtungsanordnung umfasst wenigstens
   (1) eine erste Dosiereinrichtung zur einseitigen Beschichtung einer der freien Oberflächen einer flachgelegten vorzugsweise noch schlauchförmigen oder ggf. bereits zumindest einseitig geöffneten, ein- oder mehrschichtigen Kuntstofffolie mit wenigstens einem noch nicht ausgehärteten Polysiloxan, ggf. in Kombination mit einer ersten Entlüftungseinrichtung, vorzugsweise in Form einer Schneide- oder Stichvorrichtung,
   (2) eine erste Trocknereinheit zur Aushärtung der mittels der Dosiereinrichtung (1) einseitig auf die flachgelegte schlauchförmige Folie aufgebrachten Polysiloxan-Beschichtung,
   (3) gegebenenfalls eine Wendeeinrichtung, vorzugsweise ein Wendekreuz, zum Wenden der bereits einseitig mit einer ausgehärteten Polysiloxan-Beschichtung ausgerüsteten flachgelegten, schlauchförmigen Folie,
   (4) eine zweite Dosiereinrichtung zur Ausrüstung der noch freien, nicht belegten zweiten Oberfläche der flachgelegten vorzugsweise noch schlauchförmigen oder ggf. bereits zumindest einseitig geöffneten Folie mit wenigstens einem noch nicht ausgehärteten Polysiloxan, ggf. in Kombination mit einer zweiten Entlüftungseinrichtung, vorzugsweise in Form einer Schneide- oder Stichvorrichtung,
   (5) eine zweite Trocknereinheit zur Aushärtung der mittels der Dosiereinrichtung (4) auf diese zweite Oberfläche der flachgelegten Folie aufgebrachten Polysiloxan-Beschichtung.

Weiterhin weist die zum Einsatz kommende Vorrichtungsanordnung eine Schneidevorrichtung (6) zur vollständigen Öffnung, vorzugsweise vollständigen Auftrennung, der beidseitig jeweils mit einer ausgehärteten Polysiloxan-Beschichtung ausgerüsteten, flachgelegten, vorzugsweise noch schlauchförmigen oder ggf. nur einseitig geöffneten Folie zumindest entlang eines Seitenrandes, vorzugsweise entlang beider Seitenränder in Laufrichtung, auf, vorzugsweise in Form von Messern. Vorzugsweise weist die zum Einsatz kommende Vorrichtungsanordnung - wenn notwendig - eine bzw. zwei Rollen auf, mittels derer die nach vollständigem Öffnen entlang eines Seitenrandes der flachgelegten Folie erhaltene breitgelegte Folie bzw. mittels derer die nach vollständigem Öffnen entlang beider Seitenränder erhaltenen beiden Folien aufgerollt wird bzw. werden und so aufgerollt gelagert werden können.

Die nachfolgenden Beispiele dienen der Erläuterung der Erfindung, sind jedoch nicht einschränkend auszulegen.

### Beispiele:

### Beispiel 1:

Eine durch Blasfolien-Extrusion hergestellte, einschichtige, schlauchförmige Kunststofffolie bestehend aus LDPE mit einer Schichtdicke von 35 µm wird unter Entlüftung flachgelegt und einseitig mit einem noch nicht ausgehärteten, flüssigen Polysiloxan beschichtet. Nach thermischer Aushärtung dieser Beschichtung in einer Trocknereinheit wird die einseitig beschichte, flachgelegte schlauchförmige Folie um 180°C gewendet und ihre zweite, noch freie Oberfläche ebenfalls mit einem noch nicht ausgehärteten, flüssigen Polysiloxan beschichtet. Auch diese zweite Beschichtung wird in einer Trocknereinheit thermisch ausgehärtet. Jede der Polysiloxan-Beschichtungen weist eine Schichtdicke von 2 µm auf. Die so erhaltene, beidseitig mit jeweils einem ausgehärteten Polysiloxan beschichtete, flachgelegte, schlauchförmige Folie wird in Laufrichtung entlang beider Seitenränder jeweils vollständig aufgetrennt, so dass zwei jeweils einseitig mit einem ausgehärteten Polysiloxan beschichtete LPDE-Folien erhalten werden. Jede dieser Folien weist eine Gesamtschichtdicke von 37 µm auf.

### Beispiel 2:

Eine durch Blasfolien-Extrusion hergestellte einschichtige schlauchförmige Folie aus HDPE mit einer Gesamtschichtdicke von 30 µm wird unter Entlüftung flachgelegt und einseitig mit einem noch nicht ausgehärteten, flüssigen Polysiloxan beschichtet. Nach thermischer Aushärtung dieser Beschichtung in einer Trocknereinheit wird die einseitig beschichte, flachgelegte, schlauchförmige Folie um 180°C gewendet und ihre zweite, noch freie Oberfläche ebenfalls mit einem noch nicht ausgehärteten, flüssigen Polysiloxan beschichtet und auch diese zweite Beschichtung in einer Trocknereinheit thermisch ausgehärtet. Jede der Polysiloxan-Beschichtungen weist eine Schichtdicke von 1,5 µm auf. Die so erhaltene, beidseitig mit jeweils einem ausgehärteten Polysiloxan beschichtete, flachgelegte, schlauchförmige Folie wird in Laufrichtung entlang eines Seitenrandes vollständig aufgetrennt, so dass nach der HPDE-Breitlegung der Folie eine einseitig mit einem ausgehärteten Polysiloxan beschichtete Folie erhalten wird, die eine Gesamtschichtdicke von 31,5 µm aufweist.

### Beispiel 3:

Eine durch Blasfolien-Co-Extrusion hergestellte dreischichtige schlauchförmige Folie bestehend aus einer innenliegende Schicht aus einem Copolyamid, die auf jeder Oberfläche jeweils eine Schicht (1) basierend auf einem Propylen-Copolymeren aufweist, hat eine Gesamtschichtdicke von 21 µm. Diese Folie wird unter Entlüftung flachgelegt und einseitig mit einem noch nicht ausgehärteten, flüssigen Polysiloxan beschichtet. Nach thermischer Aushärtung dieser Beschichtung in einer Trocknereinheit wird die einseitig beschichte, flachgelegte, schlauchförmige Folie um 180°C gewendet und ihre zweite, noch freie Oberfläche ebenfalls mit einem noch nicht ausgehärteten, flüssigen Polysiloxan beschichtet. Auch diese zweite Beschichtung wird in einer Trocknereinheit thermisch ausgehärtet. Jede der Polysiloxan-Beschichtungen weist eine Schichtdicke von 1,5 µm auf. Die so erhaltene, beidseitig mit jeweils einem ausgehärteten Polysiloxan beschichtete, flachgelegte, schlauchförmige Folie wird in Laufrichtung entlang beider Seitenränder jeweils vollständig aufgetrennt, so dass zwei jeweils einseitig mit einem ausgehärteten Polysiloxan beschichtete Kunststofffolien erhalten werden. Jede dieser Folien weist eine Gesamtschichtdicke von 22,5 µm auf.

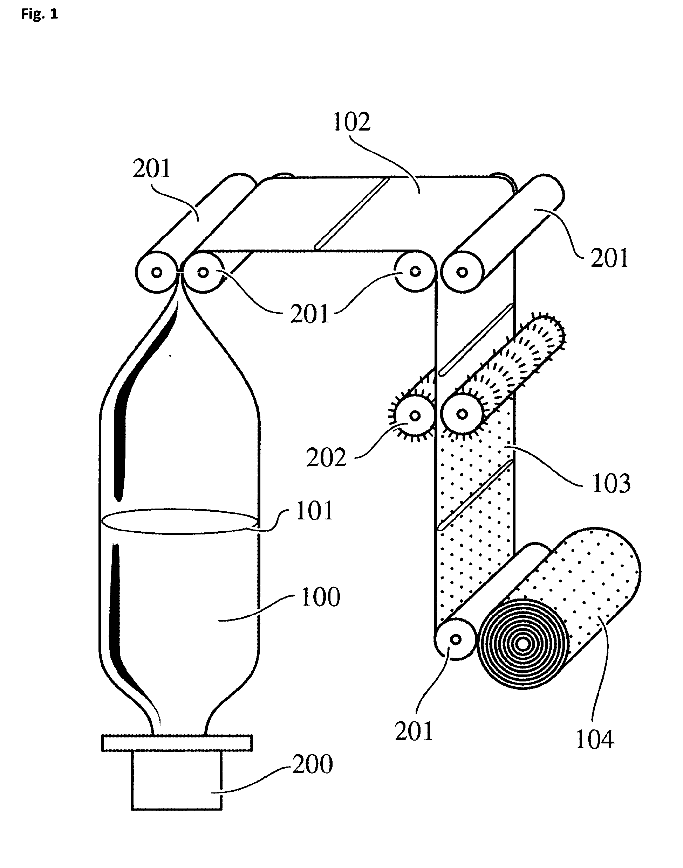

Eine bevorzugte beispielhafte Ausführungsform des erfindungsgemäßen Verfahrens ist in den Figuren 1 bis 3 (Fig. 1 bis Fig. 3) dargestellt und wird nachstehend näher erläutert.
**Fig. 1** zeigt schematisch die bevorzugte Herstellung einer in einem erfindungsgemäßen Verfahren zum Einsatz kommenden, flachgelegten, schlauchförmigen Folie. Diese schlauchförmige Folie (100) wird gemäß Blasfolien-(Co)-Extrusion durch Extrusion aus einer Ringdüse des Extruders (200) und durch ein bestimmtes Aufblasverhältnis mit einem bestimmten Durchmesser (101) hergestellt. Die so hergestellte schlauchförmige Folie (100) wird durch eine Durchführung zwischen jeweils zwei Rollen (201) flachgelegt, um so eine in dem erfindungsgemäßen Verfahren einsetzbare, flachgelegte, schlauchförmige Folie (102) zu erhalten. Die flachgelegte, schlauchförmige Folie (102) wird vorzugsweise durch zwei Walzen eines Rasterwalzwerks (202) geführt, um sie mit einer Prägestruktur zu versehen. Die geprägte, flachgelegte, schlauchförmige Folie (103) wird mittels einer weiteren Rolle (201) aufgerollt, wobei die so erhaltene flachgelegte, geprägte und aufgerollte schlauchförmige Folie (104) ggf. in diesem aufgerollten Zustand gelagert werden kann.

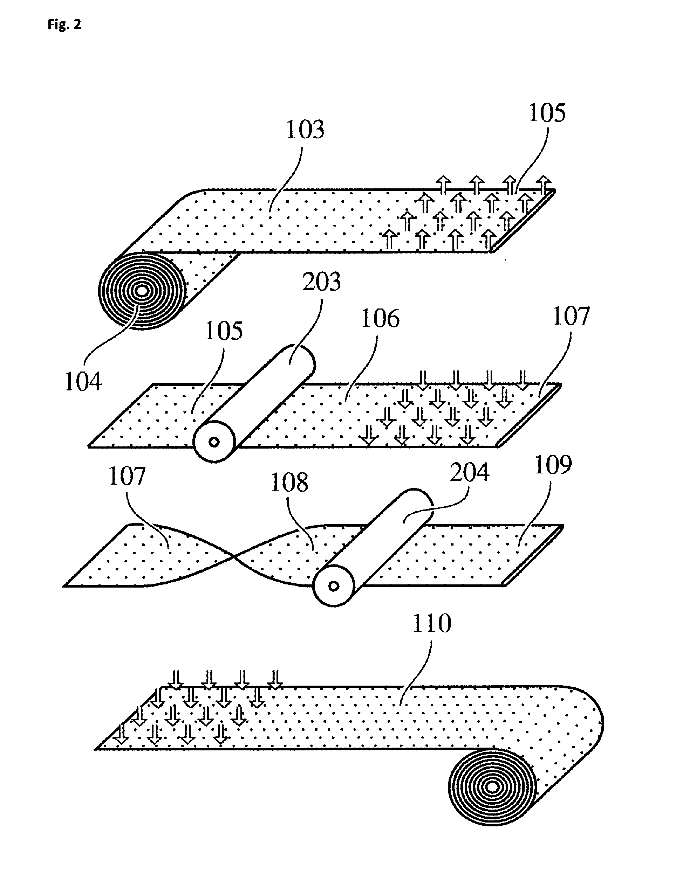

**Fig. 2** zeigt schematisch eine unter Entlüftung durchgeführte beidseitige Beschichtung einer eingesetzten, flachgelegten und geprägten, schlauchförmigen Folie gemäß dem erfindungsgemäßen Verfahren. Dabei wird zunächst die flachgelegte, geprägte, aufgerollte schlauchförmige Folie (104) zu einer geprägten, flachgelegten, schlauchförmigen Folie (103) abgerollt, die entlüftet wird (schematisch dargestellt durch die nach oben zeigenden Pfeile). Eine Oberfläche der entlüfteteten, flachgelegten, geprägten, schlauchförmigen Folie (105) wird mit wenigstens einem noch nicht ausgehärteten Polysiloxan in flüssiger Form mittels einer ersten Dosiereinrichtung (203) beschichtet. Die Beschichtung der flachgelegten schlauchförmigen Folie (106) wird unter Trocknen (schematisch dargestellt durch die nach unten zeigenden Pfeile) ausgehärtet und so eine einseitig mit einer ausgehärteten Polysiloxan-Beschichtung ausgerüstete, geprägte, flachgelegte, schlauchförmige Folie (107) erhalten. Die einseitig beschichtete, flachgelegte, schlauchförmige Folie kann aufgerollt und zwischengelagert werden, bevor sie auf ihrer freien, noch nicht beschichteten Oberfläche nach Abrollen ebenfalls mit wenigstens einem noch nicht ausgehärteten Polysiloxan, vorzugsweise in flüssiger Form, mittels einer zweiten Dosiereinrichtung beschichtet wird (nicht gezeigt). Vorzugsweise wird die schlauchförmige Folie (107), z.B. mittels eines Wendekreuzes, um 180°C gewendet, wobei die um 180°C gewendete, schlauchförmigen Folie (108) ggf. erneut entlüftet werden kann. Die noch freie, nicht belegte zweite Oberfläche dieser flachgelegten, schlauchförmigen Folie (108) wird ebenfalls mit wenigstens einem noch nicht ausgehärteten Polysiloxan, vorzugsweise in flüssiger Form, mittels einer zweiten Dosiereinrichtung (204) beschichtet und so eine beidseitig jeweils mit einem Polysiloxan beschichtete, geprägte, flachgelegte, schlauchförmige Folie (109) nach Aushärtung der Beschichtung unter Trocknen (schematisch dargestellt durch die nach unten zeigenden Pfeile) erhalten. Die beidseitig mit jeweils einer ausgehärteten Polysiloxan-Beschichtung ausgerüstete, geprägte, flachgelegte schlauchförmige Folie (110) wird aufgewickelt und ggf. gelagert.

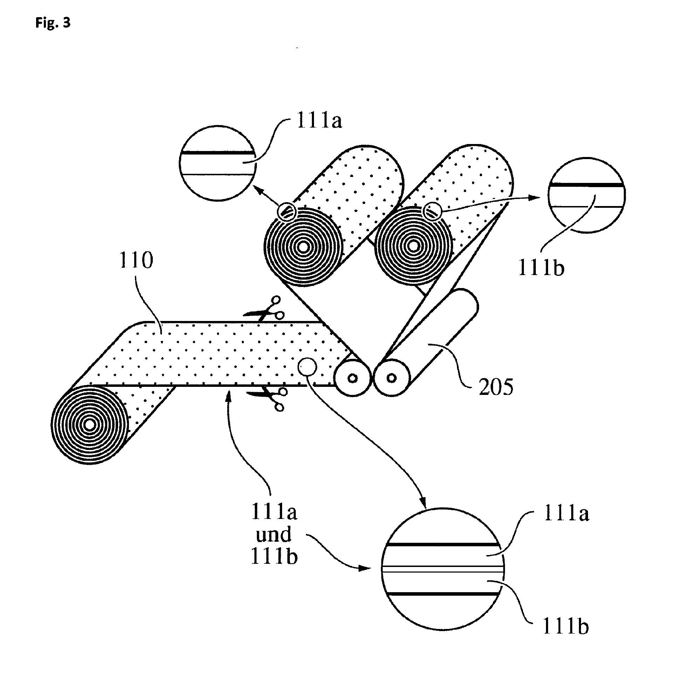

**Fig. 3** zeigt schematisch das Aufschneiden der zunächst noch aufgerollten, beidseitig jeweils mit einer ausgehärteten Polysiloxan-Beschichtung ausgerüsteten flachgelegten, geprägten, schlauchförmigen Folie (110) in Laufrichtung entlang der beiden Seitenränder. Dazu wird zunächst die beidseitig mit jeweils einer ausgehärteten Polysiloxan-Beschichtung ausgerüstete, geprägte, flachgelegte, aufgerollte, schlauchförmige Folie (110) abgewickelt und entlang der beiden Seitenränder, jeweils in Laufrichtung mittels einer Schneidevorrichtung (schematisch dargestellt durch die beiden Scheren) vollständig aufgetrennt, wobei zwei übereinanderliegende, jeweils einseitig mit jeweils einer Polysiloxan-Beschichtung ausgerüstete Folien (111 a und 111 b) erhalten werden. Mittels zweier Rollen (205) werden die übereinanderliegenden Folien (111 a und 111 b) jeweils separat aufgerollt, um jeweils eine einseitig mit einer Polysiloxan-Beschichtung ausgerüstete, aufgerollte Folie (111a) bzw. Folie (111b) zu erhalten, die jeweils ggf. bis zum Endverbrauch gelagert werden können.

## Patentansprüche

1. Ein Verfahren zur Herstellung einer einseitig mit einer thermisch ausgehärteten Polysiloxan-Beschichtung ausgerüsteten, ein- oder mehrschichtigen Kunststoffolie, gemäß dem eine schlauchförmige, flachgelegte ein- oder mehrschichtige Kunststofffolie zunächst
(a) auf einer ihrer Oberflächen mit wenigstens einem noch nicht ausgehärteten Polysiloxan einseitig beschichtet wird,
(b) diese Polysiloxan-Beschichtung unter Trocknen durch Einwirkung von Wärme ausgehärtet wird,
(c) die noch freie, nichtbelegte zweite Oberfläche der flachgelegten Kunststoffolie mit wenigstens einem noch nicht ausgehärteten Polysiloxan beschichtet wird,
(d) diese Polysiloxan-Beschichtung unter Trocknen durch Einwirkung von Wärme ausgehärtet wird und
(e) die beidseitig jeweils mit einer ausgehärteten Polysiloxan-Beschichtung ausgerüstete, flachgelegte, schlauchförmige, noch nicht oder noch nicht vollständig geöffnete Kunststofffolie in Laufrichtung zumindest entlang eines Seitenrandes vollständig geöffnet wird und die einseitig mit einer ausgehärteten Polysiloxan-Beschichtung ausgerüstete, breitgelegte Folie oder die jeweils einseitig mit einer Polysiloxan-Beschichtung ausgerüsteten, erhaltenen zwei Folien aufgerollt gelagert wird bzw. werden.

2. Ein Verfahren nach Anspruch 1, **dadurch gekennzeichnet, dass** vor dem Verfahrensschritt (c) die bereits einseitig mit einer ausgehärteten Polysiloxan-Beschichtung ausgerüstete, flachgelegte Folie um 180° gewendet oder aufgerollt und nach Zwischenlagerung für den Verfahrensschritt (c) wieder abgerollt wird.

3. Ein Verfahren nach Anspruch 1 oder 2, **dadurch gekennzeichnet, dass** das Verfahren kontinuierlich ist.

4. Ein Verfahren nach einem der Ansprüche 1 - 3, **dadurch gekennzeichnet, dass** die schlauchförmige Kunststofffolie auf einem thermoplastischen Polymeren basiert.

5. Ein Verfahren nach Anspruch 4, **dadurch gekennzeichnet, dass** die schlauchförmige Kunststofffolie auf wenigstens einem biologisch abbaubaren thermoplastischen Polymeren basiert.

6. Ein Verfahren nach Anspruch 4, **dadurch gekennzeichnet, dass** die schlauchförmige Kunststofffolie auf wenigstens einem thermoplastischen Polymeren ausgewählt aus der Gruppe umfassend Olefin-Homo- oder Copolymere, Homo- oder Copolyamide und biologisch abbaubare natürliche, halbsynthetische oder synthetische Polymere basiert.

7. Ein Verfahren nach Anspruch 6, **dadurch gekennzeichnet, dass** als thermoplastische Olefin-Homo- oder Copolymere wenigstens ein thermoplastisches Olefin-Homo- oder Copolymer von α,β-ungesättigten Olefinen mit 2 bis 10 Kohlenstoffatomen eingesetzt wurde.

8. Ein Verfahren nach Anspruch 6, **dadurch gekennzeichnet, dass** als thermoplastische Homo- oder Copolyamide wenigstens ein Homo- oder Copolyamid ausgewählt aus der Gruppe umfassend thermoplastische, aliphatische, teilaromatische oder aromatische Homo- oder Copolyamide eingesetzt werden können.

9. Ein Verfahren nach Anspruch 5, **dadurch gekennzeichnet, dass** als thermoplastische, biologisch abbaubare Polymere wenigstens ein biologisch abbaubares Polymer ausgewählt aus der Gruppe umfassend Milchsäure-Homo-Copolymere, Cellulose, Cellulose-Derivate, thermoplastische Stärke, Polyester, zumindest teilverseifte Polyvinylacetate, Ethylen-Vinylalkohol-Copolymere und eine Mischung aus wenigstens zwei der genannten Polymere eingesetzt wurde.

10. Ein Verfahren nach Anspruch 9, **dadurch gekennzeichnet, dass** als thermoplastisches, biologisch abbaubares Polymer wenigstens ein Polylactid eingesetzt wurde.

11. Ein Verfahren nach einem der Ansprüche 1 bis 10, **dadurch gekennzeichnet, dass** die schlauchförmige Kunststofffolie einschichtig ist.

12. Ein Verfahren nach Anspruch 11, **dadurch gekennzeichnet, dass** die schlauchförmige Kunststofffolie aus LDPE oder HDPE besteht.

13. Ein Verfahren nach einem der Ansprüche 1 bis 10, **dadurch gekennzeichnet, dass** die schlauchförmige Kunststofffolie einen mehrschichtigen Aufbau hat.

14. Ein Verfahren nach Anspruch 13, **dadurch gekennzeichnet, dass** der mehrschichtige Aufbau eine innenliegende Copolyamid-Schicht mit jeweils einer Schicht aus einem Propylen-Copolymer auf jeder ihrer Oberflächen aufweist.

15. Ein Verfahren nach einem der Ansprüche 1 bis 14, **dadurch gekennzeichnet, dass** die Schichtdicke der schlauchförmigen Kunststofffolie vor der Ausrüstung mit der Polysiloxan-Beschichtung ≤ 45 µm beträgt und die ausgehärtete Polysiloxan-Beschichtung jeweils eine Schichtdicke von ≤ 2 µm aufweist.

16. Ein Verfahren nach einem der Ansprüche 1 bis 14, **dadurch gekennzeichnet, dass** die flachgelegte, schlauchförmige Kunststofffolie bereits vor der Polysiloxan-Beschichtung geprägt wird.

## Claims

1. A process for producing a single- or multilayer plastics film provided with a thermally cured polysiloxane coating on one of its surfaces, according to which a tubular, flat laid single- or multilayer plastics film first
(a) is single-side coated on one of its surfaces with at least one polysiloxane that has not yet been cured,
(b) this polysiloxane coating is cured by exposure to heat under drying,
(c) the uncoated second surface of the flat laid, plastics film is coated with at least one polysiloxane that has not yet been cured,
(d) this polysiloxane coating is cured by exposure to heat under drying, and
(e) in the movement direction, and at least along one lateral edge the flat laid, tubular plastics film provided on each surface with a cured polysiloxane coating, and not yet, or not yet completely, opened is completely opened and the full-width flat film provided with a cured polysiloxane coating on one of its surfaces, or each of the resultant two films provided on one of its surfaces with a polysiloxane coating is/are stored in the form of a roll.

2. The process as claimed in claim 1, wherein before step (c) the flat laid film already provided with a cured polysiloxane coating on one of its surfaces is turned about 180° or rolled up and, after intermediate storage, is unrolled for step (c).

3. The process as claimed in claim 1 or 2, wherein the process is continuous.

4. The process as claimed in claims 1 to 3, wherein the tubular plastics film is based on a thermoplastic polymer.

5. The process as claimed in claim 4, wherein the tubular plastics film is based on at least one biodegradable thermoplastic polymer.

6. The process as claimed in claim 4, wherein the tubular plastics film is based on at least one thermoplastic polymer selected from the group consisting of olefin homo- or copolymers, homo- or copolyamides, and biodegradable natural, semisynthetic, or synthetic polymers.

7. The process as claimed in claim 6, wherein the thermoplastic olefin homo- or copolymers used comprised at least one thermoplastic olefin homo- or copolymer of α, β-unsaturated olefins having from 2 to 10 carbon atoms.

8. The process as claimed in claim 6, wherein the thermoplastic homo- or copolyamides used comprised at least one homo- or copolyamide selected from the group consisting of thermoplastic, aliphatic, semiaromatic, or aromatic homo- and copolyamides.

9. The process as claimed in claim 5, wherein the thermoplastic, biodegradable polymers used comprised at least one biodegradable polymer selected from the group consisting of lactic acid homo/copolymers, cellulose, cellulose derivatives, thermoplastic starch, polyesters, at least partially hydrolyzed polyvinyl acetates, ethylene-vinyl alcohol copolymers and mixtures of at least two of said polymers.

10. The process as claimed in claim 9, wherein the thermoplastic, biodegradable polymer used comprised at least one polylactide.

11. The process as claimed in claims 1 to 10, wherein the tubular plastics film has one layer.

12. The process as claimed in claim 11, wherein the tubular plastics film is composed of LDPE or HDPE.

13. The process as claimed in claims 1 to 10, wherein the tubular plastics film has a multilayer structure.

14. The process as claimed in claim 13, wherein the multilayer structure has an internal copolyamide layer with a layer made of a propylene copolymer on each of its surfaces.

15. The process as claimed in claims 1 to 14, wherein the thickness of the tubular plastics film prior to provision of the polysiloxane coating is ≤ 45 µm and the thickness of each cured polysiloxane coating is ≤ 2 µm.

16. The process as claimed in claims 1 to 14, wherein the flat laid, tubular plastics film is embossed before polysiloxane coating.

## Revendications

1. Procédé de fabrication d'une feuille plastique mono- ou multicouche munie sur un côté d'un revêtement en polysiloxane durci thermiquement, selon lequel une feuille plastique mono- ou multicouche tubulaire aplatie est tout d'abord
(a) revêtue d'un côté sur une de ses surfaces avec au moins un polysiloxane encore non durci,
(b) ce revêtement en polysiloxane est durci avec séchage par l'action de chaleur,
(c) la seconde surface non revêtue encore libre de la feuille plastique aplatie est revêtue avec au moins un polysiloxane encore non durci,
(d) ce revêtement en polysiloxane est durci avec séchage par l'action de chaleur et
(e) la feuille plastique tubulaire aplatie munie des deux côtés d'un revêtement en polysiloxane durci, encore non ou encore non complètement ouverte, est complètement ouverte dans le sens machine au moins le long d'un bord latéral et la feuille élargie, munie d'un côté d'un revêtement en polysiloxane durci, ou les deux feuilles obtenues, chacune munie d'un côté d'un revêtement en polysiloxane, sont stockées sous forme enroulée.

2. Procédé selon la revendication 1, **caractérisé en ce que** la feuille aplatie, déjà munie d'un côté d'un revêtement en polysiloxane durci, est tournée de 180° ou enroulée avant l'étape de procédé (c) et de nouveau déroulée après le stockage intermédiaire pour l'étape de procédé (c).

3. Procédé selon la revendication 1 ou 2, **caractérisé en ce que** le procédé est continu.

4. Procédé selon l'une quelconque des revendications 1 à 3, **caractérisé en ce que** la feuille plastique tubulaire est à base d'un polymère thermoplastique.

5. Procédé selon la revendication 4, **caractérisé en ce que** la feuille plastique tubulaire est à base d'au moins un polymère thermoplastique biodégradable.

6. Procédé selon la revendication 4, **caractérisé en ce que** la feuille plastique tubulaire est à base d'au moins un polymère thermoplastique choisi dans le groupe constitué par les homo- ou copolymères oléfiniques, les homo- ou copolyamides et les polymères naturels, semi-synthétiques ou synthétiques biodégradables.

7. Procédé selon la revendication 6, **caractérisé en ce qu'**au moins un homo- ou copolymère oléfinique thermoplastique d'oléfines α,β-insaturées contenant 2 à 10 atomes de carbone est utilisé en tant qu'homo- ou copolymères oléfiniques thermoplastiques.

8. Procédé selon la revendication 6, **caractérisé en ce qu'**au moins un homo- ou copolyamide choisi dans le groupe comprenant les homo- ou copolyamides thermoplastiques aliphatiques, partiellement aromatiques ou aromatiques peut être utilisé en tant qu'homo- ou copolyamides thermoplastiques.

9. Procédé selon la revendication 5, **caractérisé en ce qu'**au moins un polymère biodégradable choisi dans le groupe comprenant les homo- ou copolymères de l'acide lactique, la cellulose, les dérivés de cellulose, l'amidon thermoplastique, les polyesters, les polyacétates de vinyle au moins partiellement saponifiés, les copolymères d'éthylène-alcool vinylique et un mélange d'au moins deux des polymères mentionnés est utilisé en tant que polymères biodégradables thermoplastiques.

10. Procédé selon la revendication 9, **caractérisé en ce qu'**au moins un polylactide est utilisé en tant que polymère biodégradable thermoplastique.

11. Procédé selon l'une quelconque des revendications 1 à 10, **caractérisé en ce que** la feuille plastique tubulaire est monocouche.

12. Procédé selon la revendication 11, **caractérisé en ce que** la feuille plastique tubulaire est constituée de LDPE ou d'HDPE.

13. Procédé selon l'une quelconque des revendications 1 à 10, **caractérisé en ce que** la feuille plastique tubulaire a une structure multicouche.

14. Procédé selon la revendication 13, **caractérisé en ce que** la structure multicouche comprend une couche intérieure en copolyamide avec à chaque fois une couche en un copolymère de propylène sur chacune de ses surfaces.

15. Procédé selon l'une quelconque des revendications 1 à 14, **caractérisé en ce que** l'épaisseur de couche de la feuille plastique tubulaire avant l'application du revêtement en polysiloxane est ≤ 45 µm et le revêtement en polysiloxane durci présente à chaque fois une épaisseur de couche ≤ 2 µm.

16. Procédé selon l'une quelconque des revendications 1 à 14, **caractérisé en ce que** la feuille plastique tubulaire aplatie est déjà gaufrée avant le revêtement en polysiloxane.
